# EUROPÄISCHE PATENTANMELDUNG

(11) **EP 4 647 537 A1**
(43) Veröffentlichungstag der Anmeldung: **12.11.2025**
(21) Anmeldenummer: 24175154.4
(22) Anmeldetag: 10.05.2024
(51) Int. Cl.: C25B 9/77, H01M 8/248, H01M 8/2475, H01M 8/249, H01M 8/12

(54) **VORRICHTUNG ZUM MECHANISCHEN VERSPANNEN EINES STACKS MIT ELEKTROCHEMISCHEN ZELLEN**

(71) Anmelder: Sunfire SE, 01237 Dresden (DE)
(72) Erfinder: Dr. Rocha Faria Meisel, Peter, 01109 Dresden (DE); Dr. Paul, Raphael, 01277 Dresden (DE); Schmidt-Dahl, Tobias, 01097 Dresden (DE); Städel, Christian, 01189 Dresden (DE); Zschachlitz, Jens, 01277 Dresden (DE); Cintioni, Laerte, 01097 Dresden (DE)
(74) Vertreter: Hauck Patent- und Rechtsanwälte PartmbB

(57) **Zusammenfassung**

Vorrichtung zum mechanischen Verspannen eines Stacks mit elektrochemischen Zellen,
• wobei der Stack ein Paar Endplatten aufweist, die über ein Spannmittel derart aneinandergehalten sind, dass der Stack mit seinen elektrochemischen Zellen zwischen den Endplatten verspannbar ist,
• wobei das Spannmittel dazu ausgebildet ist, mit den Endplatten eine Spannkraft auf den zwischen den Endplatten angeordneten Stack auszuüben,
• und das Spannmittel als elektrischer Leiter für die elektrochemischen Zellen im Stack dient.

## Beschreibung

Die vorliegende Erfindung betrifft eine Vorrichtung zum mechanischen Verspannen eines Stacks mit elektrochemischen Zellen, die für die Elektrolyse oder als Brennstoffzelle eingesetzt werden können. Bei einem Stack handelt es sich um eine Vielzahl an Wiederholungseinheiten von hintereinandergeschalteten elektrochemischen Zellen.

SOEC-Elektrolyse-Stacks (Solid Oxide Electrolyzer Cell = SOEC) weisen mit Glas abgedichtete Wiederholungseinheiten auf, die aus Metallteilen und keramischen SOCs hergestellt werden. Für den Betrieb ist es erforderlich, dass eine mechanische Verspannkraft aufgebracht wird, um einem Auseinanderfallen bzw. einem mechanischen Bruch der Glasdichtung zwischen den Metallteilen entgegenzuwirken. Auch bei Alkali-Elektrolyseuren ist eine mechanische Verspannung notwendig.

Für das Aufbringen der Spannkraft im kalten Zustand des Stacks sind verschiedene Verspannmethoden bekannt: Zum einen wird eine aus Metallteilen bestehende Transportverspannung eingesetzt, die bei Hochtemperaturelektrolyseuren üblicherweise nach dem Transport und vor dem Einbau des Stacks zu entfernen ist. Eine auf Kunststoffbändern bestehende Ein- und Ausbauverspannung kann in diesem Fall die Aufrechterhaltung der Verspannkraft übernehmen, bis eine für den heißen Zustand vorgesehene Prozessverspannung an dem Stack anliegt. Ferner ist für Hochtemperaturelektrolyseure bekannt, bei dem Wechsel zwischen der Transportverspannung und der Prozessverspannung eine aus Kunststoffbändern bestehende Ein- und Ausbauverspannung vorzusehen, die bei einem Wechsel der Verspannung die Spannkraft aufrechterhält; diese Ein- und Ausbauverspannung kann beispielsweise im Betrieb bei höheren Temperaturen verbrennen.

Eine Vorrichtung zum Nachweis der Oxidation in einer Brennstoffzelle ist gemäß US 2018/0175418 A1 bekannt. Es ist vorgesehen, die Höhe des Brennstoffzellenstapels zu messen, wofür ein Mechanismus an dem Brennstoffzellenstapel angebracht ist, der eine Höhenzunahme gegenüber einem zuvor gemessenen Höhenwert misst und in Korrelation zu einer Oxidation in dem Brennstoffzellenstapel setzt.

Aus der JP 2011 198 546 A ist eine Stromerzeugungseinheit bekannt, die eine flache Festoxid-Brennstoffbatteriezelle aufweist; eine Steuereinheit ist mit einem ersten Belastungsmechanismus versehen, der auf die Energieerzeugungseinheit eine Last aufbringt, die die Komponente nicht beschädigt, selbst wenn sie über einen langen Zeitraum nach einer anfänglichen Reduktion normal betrieben wird; ferner ist ein zweiter Belastungsmechanismus vorgesehen, der auf die Energieerzeugungseinheit eine zusätzliche Last aufbringt. Die mechanische Verspannung wird über Bolzen aufgebracht.

Eine Anordnung und ein Verfahren zur Stapelkompression sind aus US 2011/0076585 A1 bekannt, bei der ein Leitblech so konfiguriert ist, dass es eine Last auf einen Stapel elektrochemischer Zellen aufbringt, wobei eine Kompression bzw. mechanische Spannung durch Federn erreicht wird.

In der WO 2007/112728 A1 wird eine temporäre Verspannvorrichtung angegeben, die aus einem Kunststoffmaterial besteht und bei der Betriebstemperatur einer SOC verbrennt.

EP 1 879 251 A1 offenbart einen Kompressionsanordnung zum Verteilen einer externen Druckkraft auf einen Festoxid-Brennstoffzellenstapel, wobei die Kompressionsanordnung eine Kraftverteilungsplatte und eine Kraftverteilungsschicht umfasst, so dass die externe Kompressionsanordnung zusammen mit dem Festoxid-Brennstoffzellenstapel montiert ist, die externe Kompressionskraft auf die Kraftverteilungsplatte ausgeübt wird. Es wird insgesamt eine Kompressionsanordnung offenbart, die mittels elastischer Elemente wie metallische Federn und Platten an beiden Enden des Stacks eine Kraftverteilung realisiert.

Gemäß EP 3 625 846 A1 ist eine elektrochemische Vorrichtung bekannt, die als SOEC-Elektrolyse- oder Ko-Elektrolysereaktor oder eine SOFC-Brennstoffzelle bei hoher Temperatur arbeitet. Die bekannte Vorrichtung weist folgendes auf:
- einen Stapel elektrochemischer Zellen auf Basis von Festoxiden vom SOEC-/SOFC-Typ;
- zwei Endplatten, sogenannte Abschlussplatten, zwischen denen der Stapel angeordnet ist;
- zwei Spannplatten des Stapels, zwischen denen die Endplatten und der Stapel angeordnet sind;
- Spannmittel zwischen den Spannplatten, wobei die Spannmittel geeignet sind, den Stapel zwischen den Abschlussplatten zu spannen und gespannt zu halten, unabhängig von der Temperatur zwischen der Umgebungstemperatur und den hohen Betriebstemperaturen der Vorrichtung;
- eine Spannkammer, die zwischen einer der Abschlussplatten und der benachbarten Spannplatte begrenzt ist, wobei die Spannkammer mit einem Spanngaskreislauf im Überdruck im Verhältnis zum Inneren des Stapels verbunden ist.

Der Erfindung liegt die Aufgabe zugrunde, eine Vorrichtung zum mechanischen Verspannen mindestens eines Stacks mit elektrochemischen Zellen bereitzustellen, die mit einfachen Mitteln den Umgang mit Stacks beim Transport, Ein- sowie Ausbau sowie beim Betrieb erleichtert. Vorteilhafte Ausgestaltungen bilden den Gegenstand der Unteransprüche.

Die erfindungsgemäße Vorrichtung besitzt die Merkmale aus Anspruch 1. Demnach ist die Vorrichtung zum mechanischen Verspannen mindestens eines Stacks mit elektrochemischen Zellen als Wiederholungseinheiten geeignet und vorgesehen. Der Stack weist ein Paar von Endplatten auf, die über ein Spannmittel derart aneinandergehalten sind, dass der Stack mit seinen elektrochemischen Zellen zwischen den Endplatten verspannt werden kann. Das Spannmittel ist dazu ausgebildet, mit den Endplatten eine Spannkraft auf die zwischen den Endplatten angeordneten Zellen auszuüben. Erfindungsgemäß ist vorgesehen, dass das Spannmittel als elektrischer Leiter für die elektrischen Zellen im Stack ausgebildet ist und als elektrischer Leiter für den Stack dient. Durch die Verwendung des Spannmittels als elektrischer Leiter ist es möglich, die Vorrichtung zum mechanischen Verspannen des Stacks sowohl beim Transport als auch beim Betrieb des Stacks einzusetzen. Bei bisherigen Vorrichtungen zum Verspannen des Stacks war es erforderlich, nach dem Einbau des Stacks elektrische Leiter an dem Stack anzuschließen, wozu es erforderlich war, innerhalb der Elektrolyseanlage zu schweißen. Für diesen Schweißvorgang war es erforderlich, von der Transportverspannung hin zu einer Betriebsverspannung zu wechseln, also von einer Konstruktion, die bei Raumtemperatur den Transport ermöglicht, zu einer anderen Konstruktion zu wechseln, die die mechanische Verspannung während der Betriebstemperaturen, beispielsweise auch bei einer Hochtemperaturelektrolyse, realisiert. Indem das Spannmittel erfindungsgemäß als elektrischer Leiter für den Stack eingesetzt wird, entfällt der Schritt des nachträglichen Anbringens der elektrischen Leiter am Stack. Hierdurch kann eine durchgehende Verspannung für den Stack eingesetzt werden, die für den Betrieb und Transport geeignet ist.

Bevorzugt ist mindestens ein Federpaket vorgesehen, das über mindestens eine der Endplatten die Spannkraft auf den zwischen den Endplatten angeordneten Stack ausübt. Ein Vorteil des Federpakets besteht auch darin, dass temperaturbedingte Längenänderungen ausgeglichen werden können und eine konstante Federkraft aufgebracht werden kann.

In einer bevorzugten Weiterbildung weist das Paar von Endplatten eine Stack-Bodenplatte und eine Stack-Topplatte auf. Eine der beiden Endplatten steht mit dem Spannmittel in einem elektrischen Kontakt. Bevorzugt kann das Spannmittel also an einer der Endplatten verbunden sein und so beispielsweise den elektrischen Kontakt zwischen der Endplatte und dem elektrischen Spannmittel herstellen.

In einer bevorzugten Weiterbildung ist die andere der beiden Endplatten mit einem weiteren elektrischen Leiter ausgestattet, der auf der vom Stack fortweisenden Seite der Stack-Topplatte oder der Stack-Bodenplatte angeordnet ist und der eine elektrische Kontaktierung mit dem Stack aufweist. Mit den beiden Endplatten einher geht also ein Spannmittel, das in elektrischem Kontakt mit einer der beiden Endplatten steht (und damit einen Pol bildet) und ein weiterer elektrischer Leiter, der an der Stack-Topplatte oder der Stack-Bodenplatte angeordnet eine elektrische Kontaktierung (mit dem anderen Pol) des Stacks aufweist. Auf diese Weise sind beide Enden des Stacks mit ihren Polen mit elektrischen Leitern kontaktiert und können so den elektrischen Anschluss für den Stack über zwei elektrische Leiter herstellen.

In einer bevorzugten Weiterbildung ist eine Brücke vorgesehen, durch die das Spannmittel geführt ist. Mithilfe der Brücke, die beispielsweise als plattenförmiges Bauteil oder als Strebe oder Riegel ausführt sein kann, wird bevorzugt die Spannkraft gleichmäßig auf die Zellen ausgeübt. Indem das Spannmittel durch die Brücke geführt ist, kann die Brücke ihre Position relativ zu den Spannmitteln ändern, um so die gewünschte Spannkraft auf den Stack auszuüben.

In einer bevorzugten Ausgestaltung ist das Spannmittel mit der Brücke zum Aufbringen einer Spannkraft mit einer der Endplatten verbunden. Dies gilt insbesondere im Kaltzustand, also im Transportzustand des Stacks.

In einer weiter bevorzugten Ausgestaltung ist das Federpaket vorgesehen, das sich an der Brücke abstützt und seine Spannkraft auf eine der Endplatten aufbringt. Bevorzugt kann hier insbesondere für den Betriebszustand ein Dämmelement zwischen Brücke und Federpaket vorgesehen sein. In dieser Ausgestaltung wirkt dann das Federpaket zwischen der Brücke und dem Dämmelement, um die Spannkraft auf eine der Endplatten aufzubringen.

Das Federpaket unterstützt die Spannkraft und besitzt zudem den Vorteil, einen gleichmäßigen Druck aufbauen zu können.

In einer bevorzugten Weiterbildung ist ein weiteres Spannmittel vorhanden, das als ein Gehäuse für mindestens einen Stack ausgebildet ist. Das Gehäuse besitzt einen rohrförmigen Körper und zusätzlich einen Deckel, wobei der Deckel in seinem am Gehäuse befestigten Zustand die Spannkraft auf die Brücke ausübt. Durch das Gehäuse wird sichergestellt, dass mit dem Deckel zum Verschließen des Gehäuses ein weiteres Spannmittel auf die Brücke wirkt. Auch kann in dem Gehäuse ein Gerüst vorhanden sein, das die Aufnahme und das Verspannen mehrerer Stacks ermöglicht. In diesem Fall werden die Stacks jeweils mit dem Gerüst als weiteres Spannmittel mechanisch verspannt.

Dieses weitere Spannmittel kann ergänzend, beispielsweise zu dem Federpaket eine Spannkraft auf die Brücke ausüben. Wenn die Brücke mit dem Deckel verbunden ist, kann zwischen Deckel und Brücke in einer bevorzugten Ausführung zusätzlich ein Sensor angeordnet sein. Der Sensor kann verschiedene Parameter an dem Stack überwachen, so kann er beispielsweise auch die mechanische Spannkraft messen. Der Sensor kann auch an einer anderen Stelle am Stack oder im Gehäuse oder am Gerüst angeordnet sein.

In einer ebenfalls bevorzugten Ausgestaltung ist ein Gehäuse für mehrere Stacks ausgebildet und mindestens ein Stack ist mit einem Stack-Spannmittel ausgestattet, das die Spannkraft auf die Brücke ausübt. Über die Brücke wird die Spannkraft dann auf die weiteren, in dem Gehäuse angeordneten Stacks ausgeübt werden.

In einer bevorzugten Weiterbildung ist das Spannmittel mit zwei oder mehr Stäben, insbesondere Metallstäben, ausgestattet. Die Stäbe sind derart ausgebildet, dass der elektrische Strom bei geringem Widerstand, vorteilhafterweise bei hohen Temperaturen wie beim Betrieb einer Hochtemperaturelektrolyse, durch diese geleitet werden kann.

Ebenfalls bevorzugt sind die elektrochemischen Zellen in dem Stack auf Basis von Festoxiden vom SOEC-/SOC-Typ ausgebildet.

Ein bevorzugtes Ausführungsbeispiel wird anhand der nachfolgenden Figuren näher erläutert. Es zeigen:
- Figur 1: schematische Darstellung einer Ausführungsform einer erfindungsgemäßen mechanischen Verspannvorrichtung in einem zylindrischen Gehäuse und
- Figur 2: den Aufbau aus Figur 1 ohne Gehäuse mit elektrischen Kontakten.

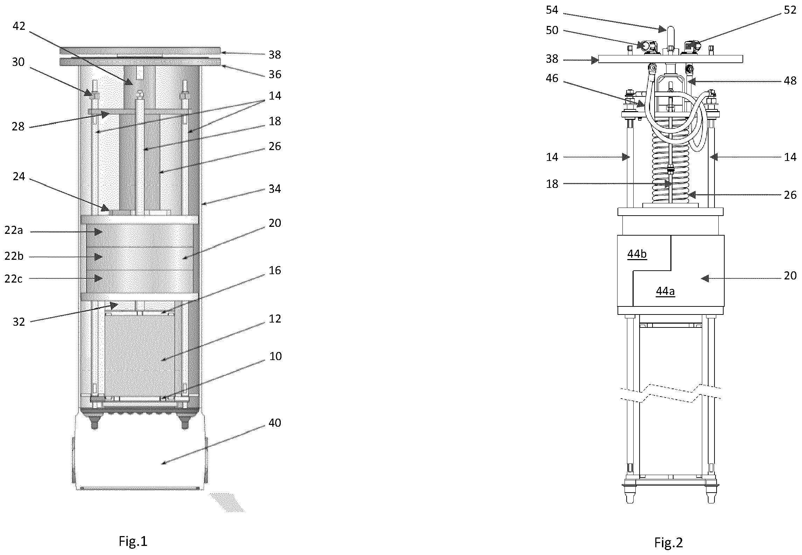

Die Verspannvorrichtung der Figur 1 weist eine Stack-Grundplatte 10 auf, an die angrenzend ein Stack 12 vorgesehen ist. Der Stack 12 besteht aus aufeinander gestapelten Wiederholungseinheiten, die über Glasdichtungen gegeneinander abgedichtet sind. In der Abbildung ist das Größenverhältnis zwischen Stack und Verspannvorrichtung für einen Stack mit etwa 30 Wiederholeinheiten dargestellt. Die Verspannvorrichtung ist auch für Stacks mit bis zu 900 Wiederholeinheiten geeignet. Entlang dem Stack 12 sind zwei Stäbe 14 geführt, die einen Abstand von dem Stack 12 aufweisen und mit der Stack-Grundplatte 10 elektrisch leitend verbunden sind. Die beiden Stäbe 14 dienen während des Transports und des Handlings zur Übertragung der Verspannkräfte auf den Stack und auf die im Stack befindlichen Zellen. Sie sind dabei entsprechend dimensioniert, um eine ausreichende Verspannkraft auf den Stack auszuüben. Im Betriebszustand bilden die beiden Stäbe 14 aufgrund ihres mechanischen Kontakts mit der Stack-Grundplatte den Minuspol-Stromleiter des Stacks. Der Stack 12 mit seinen elektrischen Zellen ist dabei mit der Stack-Grundplatte als Minuspol des Stacks 12 verbunden.

Der Stack 12 ist zwischen einem Paar von Grundplatten angeordnet, wobei eine Stack-Topplatte 16 und eine Stack-Grundplatte 10 an beiden Seiten des Stacks vorgesehen sind. Auf der Stack-Topplatte 16 ist ein Stab 18 angeordnet, der im Betrieb als Plus-Stromleiter des Stacks 12 ausgeführt ist. Ferner ist ein Dämmaufbau 20 vorgesehen, der einen mehrlagigen Schichtaufbau von thermisch isolierenden Platten 22a, 22b, 22c aufweist. Der Dämmaufbau 20 ist mit einer Auflageplatte 24 versehen, die im Kontakt mit einem Federpaket 26 steht. Das Federpaket 26 liegt mit einem Ende an der Auflageplatte 24 an und mit seinem anderen Ende an einer Brücke 28. Die Brücke 28 ist vorgesehen, um die Verspannkraft auf den zwischen der Stack-Grundplatte 10 und der Stack-Topplatte 16 angeordneten Stack 12 auszuüben. Die Brücke 28 ist hierzu mit Bohrungen versehen, durch die die Stäbe (Minuspol-Leiter) 14 geführt sind. Über eine Kombination von Muttern und Hülsen 30 kann eine Verspannkraft auf die Brücke 28 ausgeübt werden. Die Stäbe (Minuspol-Leiter) 14 sind hierfür an ihrem freien Ende mit einem Außengewinde ausgestattet, auf das eine Mutter 30 aufgeschraubt werden kann. Die Brücke 28 drückt über das Federpaket 26 auf die Auflageplatte 24, den Dämmaufbau 20 und auf die Stack-Topplatte 16. Hierbei kann zwischen dem Dämmaufbau 20 und der Stack-Topplatte ein separat ausgebildetes Druckstück 32 vorgesehen sein, das die Kraft dem Dämmaufbau 20 auf die Stack-Topplatte 16 überträgt.

Um nach dem Transport des Stacks 12 die aufgebaute Zugkraft entfernen zu können, ist es vorgesehen, eine rohrförmige Einhausung 34 vorzusehen. Die rohrförmige Einhausung 34 besitzt an einem Ende einen abstehenden Ringflansch 36, auf dem ein Deckel 38 aufgeschraubt werden kann. An dem dem Deckel 38 gegenüberliegenden unteren Ende der rohrförmigen Einhausung 34 ist ein Gasverteiler 40 vorgesehen. Nach dem Transport wird durch ein Schließen des Deckels 38 eine Druckkraft auf die Brücke 28 ausgeübt. Für die Druckkraft kann ein zentrales Druckstück 42 vorgesehen sein, das die Kraft des an dem Ringflansch 36 befestigten Deckels 38 auf die Brücke 28 überträgt.

Die rohrförmige Einhausung 34 kann je nach Ausgestaltung geschlossene oder durchbrochene Wandungen aufweisen. Die rohrförmige Einhausung 34 besitzt einen Durchmesser, der die Verspannvorrichtung mit dem Stack und den beiden Stäben (Minuspol-Stromleiter) 14 aufnehmen kann. Statt der rohrförmigen Einhausung 34 kann auch ein Gerüst für die Aufnahme des Stacks 12 vorhanden sein, das die gleiche Funktionsweise wie die rohrförmige Einhausung 34 in Bezug auf die mechanische Verspannung bietet.

Figur 2 zeigt die Verspannvorrichtung aus Figur 1, wobei der Dämmaufbau 20 zwei L-förmig ineinandergreifende Elemente 44a, 44b aufweist. Die Minuspol-Stromleiter sind über Kabel 46, 48 mit elektrischen Kontakten 50 und 52 auf der Deckelaußenseite verbunden. Die elektrischen Kontakte 50, 52 sind auf der Außenseite des Deckels 38 befestigt und können dort kontaktiert werden. Ebenfalls in Figur 2 zu erkennen ist der elektrische Kontakt 54 für den Pluspol, der von dem Pluspol-Stromleiter 18 stammt. Der Pluspol-Stromleiter 18 ist zentral durch das Federpaket 26 geführt.

Die erfindungsgemäße Verspannvorrichtung bietet die Vorteile, dass Arbeitsschritte bei einem Umspannen vor und während der Stack-Montage sowie der Stack-Demontage entfallen. Ein weiterer Vorteil besteht darin, dass ein kritischer Arbeitsschritt, wie das Anschweißen von elektrischen Leitern an Stromkontakten in der Nähe des Stacks, unterbleiben kann, da die Stäbe 14, die für die mechanische Verspannung genutzt werden, ebenso Strom führen können.

## Patentansprüche

1. Vorrichtung zum mechanischen Verspannen eines Stacks mit elektrochemischen Zellen,
• wobei der Stack ein Paar Endplatten aufweist, die über ein Spannmittel derart aneinandergehalten sind, dass der Stack mit seinen elektrochemischen Zellen zwischen den Endplatten verspannbar ist,
• wobei das Spannmittel dazu ausgebildet ist, mit den Endplatten eine Spannkraft auf den zwischen den Endplatten angeordneten Stack auszuüben,
• und das Spannmittel als elektrischer Leiter für die elektrochemischen Zellen im Stack dient.

2. Vorrichtung nach Anspruch 1, **dadurch gekennzeichnet, dass** mindestens eine der Endplatten die Spannkraft über ein Federpaket auf den zwischen den Endplatten angeordneten Stack ausübt.

3. Vorrichtung zum mechanischen Verspannen nach Anspruch 1 oder 2, **dadurch gekennzeichnet, dass** das Paar Endplatten eine Stack-Bodenplatte und eine Stack-Topplatte aufweist, wobei eine der beiden Endplatten mit dem Spannmittel in einem elektrischen Kontakt steht.

4. Vorrichtung zum mechanischen Verspannen nach Anspruch 3, **dadurch gekennzeichnet, dass** die andere der beiden Endplatten einen weiteren elektrischen Leiter aufweist, der auf der Stack-Topplatte oder der Stack-Bodenplatte angeordnet ist und der eine elektrische Kontaktierung mit dem Stack aufweist.

5. Vorrichtung zum mechanischen Verspannen nach einem der Ansprüche 1 bis 4, **dadurch gekennzeichnet, dass** das Spannmittel durch eine Brücke geführt ist.

6. Vorrichtung zum mechanischen Verspannen nach einem der Ansprüche 1 bis 5, **dadurch gekennzeichnet, dass** mindestens auf einer der vom Stack fortweisenden Seite der Endplatten ein Dämmelement angeordnet ist.

7. Vorrichtung zum mechanischen Verspannen nach einem der Ansprüche 1 bis 6, **dadurch gekennzeichnet, dass** das Spannmittel mit der Brücke zum Aufbringen einer Spannkraft mit einer der Endplatten verbunden ist.

8. Vorrichtung zum mechanischen Verspannen nach einem der Ansprüche 2 bis 7, **dadurch gekennzeichnet, dass** das Federpaket sich an der Brücke abstützt und die Spannkraft auf eine der Endplatten aufbringt.

9. Vorrichtung zum mechanischen Verspannen nach Anspruch 8, **dadurch gekennzeichnet, dass** das Federpaket zwischen Brücke und Dämmelement wirkt und die Spannkraft auf eine der Endplatten aufbringt.

10. Vorrichtung zum mechanischen Verspannen nach einem der Ansprüche 1 bis 9, **dadurch gekennzeichnet, dass** ein weiteres Spannmittel vorhanden ist, wobei das weitere Spannmittel ein Gehäuse ist, das einen rohrförmigen Körper und zusätzlich einen Deckel aufweist, wobei der Deckel in einem am Gehäuse befestigten Zustand die Spannkraft auf die Brücke ausübt oder das weitere Spannmittel ein Gerüst in einem Gehäuse ist, um mehrere Stacks aufzunehmen und mechanisch zu verspannen.

11. Vorrichtung nach einem der Ansprüche 1 bis 10, **dadurch gekennzeichnet, dass** das Gehäuse für mehrere Stacks ausgebildet ist und mindestens ein Stack mit einem Stack-Spannmittel zur Ausübung der Spannkraft auf die Brücke ausgestattet ist.

12. Vorrichtung zum mechanischen Verspannen nach Anspruch 10 oder 11, **dadurch gekennzeichnet, dass** der Deckel auf seiner zum Stack weisenden Seite einen Abstandshalter aufweist, der in dem an dem Gehäuse befestigten Zustand des Deckels an der Brücke anliegt.

13. Vorrichtung zum mechanischen Verspannen nach einem der Ansprüche 1 bis 12, **dadurch gekennzeichnet, dass** das Spannmittel zwei oder mehr Stäbe, bevorzugt Metallstäbe, aufweist.

14. Vorrichtung zum mechanischen Verspannen nach einem der Ansprüche 1 bis 13, **dadurch gekennzeichnet, dass** die elektrochemischen Zellen auf Basis von Festoxiden vom SOEC-/SOC-Typ ausgebildet sind.
